# EUROPEAN PATENT SPECIFICATION

(11) **EP 3 809 344 B1**
(45) Date of publication and mention of the grant of the patent: **22.04.2026**
(21) Application number: 20192761.3
(22) Date of filing: 25.08.2020
(51) Int. Cl.: G06Q 10/02, G06Q 10/04, G06Q 10/06

(54) **INFORMATION PROCESSING APPARATUS, NON-TRANSITORY STORAGE MEDIUM, AND SYSTEM FOR ROUTING VEHICLES TO AREAS WITH HIGH DEMAND**
INFORMATIONSVERARBEITUNGSVORRICHTUNG, NICHTTRANSITORISCHES SPEICHERMEDIUM UND SYSTEM UM FAHRZEUGE ZUR ORTEN MIT EINER HOHEN NACHFRAGE
APPAREIL DE TRAITEMENT D'INFORMATIONS, SUPPORT DE STOCKAGE NON TRANSITOIRE ET SYSTÈME DE ROUTAGE DE VEHICULES VERS LES ZONES A FORTE DEMANDE

(30) Priority: 16.10.2019 JP 2019189380
(43) Date of publication of application: 21.04.2021
(73) Proprietor: TOYOTA JIDOSHA KABUSHIKI KAISHA, TOYOTA-SHI, AICHI-KEN 471-8571 (JP)
(72) Inventor: KANEICHI, Daiki, TOYOTA-SHI, AICHI-KEN, 471-8571 (JP)
(74) Representative: Cabinet Beau de Loménie

(56) References cited:
- WO-A1-2015/018309
- JP-A- 2015 122 108
- JP-A- 2019 079 267
- US-A1- 2002 052 751
- GE YONG ET AL: "An energy-efficient mobile recommender system", CIKM'10, PROCEEDINGS OF THE 19TH INTERNATIONAL CONFERENCE ON INFORMATION & KNOWLEDGE MANAGEMENT AND CO-LOCATED WORKSHOPS : OCTOBER 26 - 30, 2010, TORONTO, ONTARIO, CANADA, ACM, NEW YORK, NY, 25 July 2010 (2010-07-25), pages 899 - 908, XP058597305, ISBN: 978-1-4503-0099-5, DOI: 10.1145/1835804.1835918
- MENG QU ET AL: "A cost-effective recommender system for taxi drivers", KNOWLEDGE DISCOVERY AND DATA MINING, ACM, 2 PENN PLAZA, SUITE 701 NEW YORK NY 10121-0701 USA, 24 August 2014 (2014-08-24), pages 45 - 54, XP058053741, ISBN: 978-1-4503-2956-9, DOI: 10.1145/2623330.2623668
- GUO YIKE ET AL: "Route Recommendations for Idle Taxi Drivers : Find Me the Shortest Route to a Customer!", 19 July 2018 (2018-07-19), US, pages 1425 - 1434, XP055774755, ISBN: 978-1-4503-5552-0, Retrieved from the Internet <URL:https://dl.acm.org/doi/pdf/10.1145/3219819.3220055> DOI: 10.1145/3219819.3220055

## Description

### BACKGROUND OF THE INVENTION

### 1. Field of the Invention

The invention relates to a computer-implemented method, an information processing apparatus, a non-transitory storage medium, and a system.

### 2. Description of Related Art

There is known a technology in which customer expectations indicating demands in respective areas are calculated and recommended movement information is provided based on the customer expectations (see, for example, Japanese Unexamined Patent Application Publication No. 2019-079267 (JP 2019-079267 A), International Patent Application Publication No. 2015/018309 (WO 2015/018309 A1), Meng Qu et al, "A cost-effective recommender system for taxi drivers" (DOI: 10.1145/262330.2623668), and Guo Yike et al, "Route Recommendations for Idle Taxi Drivers: Find Me the Shortest Route to a Customer!" (DOI: 10.1145/3219819.3220055)). Yong Ge et al, "An Energy-Efficient Mobile Recommender System" (DOI: 10.1145/1835804.1835918) discloses a routing algorithm based on calculated pick-up probabilities derived from centroids of clustered historical pick-up locations.

### SUMMARY OF THE INVENTION

The invention and preferred embodiments are defined in the appended claims. The invention provides a technology for navigating a vehicle to appropriate positions even though demands change depending on time.

A first aspect of the present disclosure relates to a computer-implemented method comprising the steps of acquiring demands of passengers, at each of time points dividing a predetermined period, of areas to which a vehicle is movable until the each of the time points, and extracting areas where the vehicle is located at the each of the time points such that a total of the demands in the predetermined period is largest.

In the first aspect, the method may comprise a step of transmitting information about the extracted areas to the vehicle.

In the first aspect, the method may comprise a step of generating information related to a route of the vehicle such that the vehicle moves through the extracted areas in order of the time points corresponding to the extracted areas, and transmitting the generated information about the route to the vehicle.

In the first aspect, the predetermined period may be set based on positional information of the vehicle.

In the first aspect, the predetermined period may be set based on an average period necessary for the vehicle to pick up a passenger in a predetermined region corresponding to a position of the vehicle.

In the first aspect, the demands may be acquired for a plurality of the vehicles, the demands may be adjusted depending on the number of the vehicles existing in the same area at the same time point out of the time points, and areas may be extracted where the vehicles are located at the each of the time points such that a total of the demands for the vehicles in the predetermined period satisfies a second predetermined condition.

In the first aspect, the demands may be adjusted such that the demands associated with the same area at the same time point decrease as the number of the vehicles existing in the same area at the same time point increases.

In the first aspect, the areas may be extracted such that the total of the demands for the vehicles in the predetermined period satisfies the second predetermined condition that the total of the demands for the vehicles in the predetermined period is largest.

A second aspect of the present disclosure relates to a non-transitory storage medium storing instructions that are executable by one or more processors and that cause the one or more processors to perform functions. The functions include acquiring demands of passengers, at each of time points dividing a predetermined period, of areas to which a vehicle is movable until the each of the time points, and extracting areas where the vehicle is located at the each of the time points such that a total of the demands in the predetermined period is largest.

In the second aspect, the functions may include transmitting information about the extracted areas to the vehicle.

In the second aspect, the functions may include generating information related to a route of the vehicle such that the vehicle moves through the extracted areas in order of the time points corresponding to the areas, and transmitting the generated information about the route to the vehicle.

In the second aspect, the functions may include setting the predetermined period based on positional information of the vehicle.

In the second aspect, the functions may include setting the predetermined period based on an average period necessary for the vehicle to pick up a passenger in a predetermined region corresponding to a position of the vehicle.

In the second aspect, the functions may include acquiring the demands for a plurality of the vehicles, adjusting the demands depending on the number of the vehicles existing in the same area at the same time point out of the time points, and extracting areas where the vehicles are located at the each of the time points such that a total of the demands for the vehicles in the predetermined period satisfies a second predetermined condition.

In the second aspect, the functions may include adjusting the demands such that the demands associated with the same area at the same time point decrease as the number of the vehicles existing in the same area at the same time point increases.

In the second aspect, the functions may include extracting the areas such that the total of the demands for the vehicles in the predetermined period satisfies the second predetermined condition that the total of the demands for the vehicles in the predetermined period is largest.

A third aspect of the present disclosure relates to an information processing apparatus comprising a controller. The controller is configured to carry out the computer-implemented method of the first aspect. In this third aspect, the information processing apparatus may further comprise a memory configured to, at the each of the time points, store the demands of passengers in each of the areas.

A fourth aspect of the present disclosure relates to a system. The system includes a vehicle and a server. The vehicle is configured to transmit positional information to the server. The server includes a controller. The controller is configured to acquire, based on the positional information received from the vehicle, areas to which the vehicle is movable until each of time points dividing a predetermined period, acquire demands of passengers, at the each of the time points, of the areas to which the vehicle is movable until the each of the time points, and extract areas where the vehicle is located at the each of the time points such that a total of the demands in the predetermined period is largest.

According to the first aspect, the second aspect, the third aspect, and the fourth aspect of the present disclosure, the vehicle can be navigated to appropriate positions even though demands change depending on time.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating the overall configuration of a system according to a first embodiment;
FIG. 2 is a block diagram schematically illustrating an example of the configurations of a vehicle and a server that constitute the system according to the first embodiment;
FIG. 3 is a diagram illustrating an example of the functional configuration of the vehicle;
FIG. 4 is a diagram illustrating an example of the functional configuration of the server;
FIG. 5 is a diagram for describing areas to which the vehicle is movable;
FIG. 6 is a diagram illustrating areas to which the vehicle is movable in a period from a time point T1 to a time point T2 if the vehicle is located in an area C4 at the time point T1;
FIG. 7 is a diagram illustrating demands associated with the respective time points;
FIG. 8 is a diagram exemplifying the configuration of a vehicle information table;
FIG. 9 is a diagram exemplifying the configuration of a demand information table;
FIG. 10 is a flowchart illustrating an example of a process for outputting a route from the server to the vehicle;
FIG. 11 is a flowchart illustrating a flow of a process for outputting vehicle information from the vehicle;
FIG. 12 is a flowchart illustrating a flow of a process to be performed when the vehicle shows a route to a driver;
FIG. 13 is a diagram illustrating the overall configuration of a system according to a second embodiment; and
FIG. 14 is a flowchart illustrating an example of a process for outputting routes from a server to vehicles.

### DETAILED DESCRIPTION OF EMBODIMENTS

An information processing apparatus according to an aspect of the present disclosure includes a controller. The controller acquires passenger demands at a plurality of time points in a predetermined period in areas to which a vehicle is movable by the respective time points. For example, the vehicle is a taxi that carries a passenger to receive a fare. For example, the taxi may be a so-called street taxi or a taxi that picks up a passenger at a taxi stand or by a call. For example, the predetermined period may be set as a period from a current time point to a time point when the vehicle picks up a passenger. For example, the period necessary for the vehicle to pick up a passenger may be acquired based on a previous period actually necessary for the vehicle to pick up a passenger. For example, the start point of the predetermined period is a time point when navigation of the vehicle is started, and may be a current time point or any time point in the future. The respective time points are time points in the predetermined period, and divide the predetermined period. The interval between the time points may be constant or varied. For example, the area to which the vehicle is movable may be an area bordered based on longitude and latitude, or an area bordered based on administrative division, such as a city, a district, a town, or a village. The same vehicle may be located in the same area at different time points. For example, the area to which the vehicle is movable may be calculated based on time and speed limits on roads, or may be calculated under the assumption that the vehicle travels by a constant distance between the time points. The demand is a value correlated to the number of passengers in each area at each time point in the future. For example, the demand may be the number of expected passengers in each area at each time point, or a value correlated to the number of expected passengers in each area at each time point. The demand may be calculated by the controller, or may be provided from other servers or the like.

The controller extracts areas where the vehicle is located at the respective time points so that the total of the demands in the predetermined period satisfies a predetermined condition. The total of the demands is correlated to a probability that the vehicle picks up a passenger in the predetermined period. The probability that the vehicle picks up a passenger can be increased by extracting the areas where the vehicle is located at the respective time points so that the predetermined condition is satisfied. Thus, the sales can be increased, for example.

The controller may transmit information related to the extracted areas to the vehicle. By transmitting, to the vehicle, the areas where the vehicle may be located at the respective time points, a driver of the vehicle can know the target areas at the respective time points. Therefore, it is possible to generate, for example, a route along which the vehicle is likely to pick up a passenger.

The controller may generate information related to a route of the vehicle so that the vehicle moves through the extracted areas in order of the time points associated with the respective areas, and transmit the generated information related to the route to the vehicle. Thus, the controller may generate the route of the vehicle and provide the route to the vehicle. For example, the vehicle displays the route, and the driver can therefore drive the vehicle along the route.

The information processing apparatus may further include a memory that stores the passenger demands in the areas in association with the respective time points. For example, the demands may be estimated based on previous records of the passenger demands, or based on a current population. The demands may also be estimated based on information related to events or information as to whether railway services are suspended. The demands may be calculated by the controller and stored in the memory, or information on the demands may be acquired from other servers or the like by the controller and stored in the memory. By storing the demands in the memory, the areas associated with the vehicle can be extracted promptly.

The controller may set the predetermined period based on positional information of the vehicle. The ease of picking up a passenger may differ depending on a current position of the vehicle. For example, the vehicle picks up a passenger more easily in a large-population region than a small-population region. Therefore, there is a strong possibility that the vehicle picks up a passenger in a shorter period in the large-population region than the small-population region. Thus, the vehicle navigation period may be shortened. That is, the predetermined period can be shortened for the vehicle located in the large-population region. By setting the predetermined period based on the positional information of the vehicle, excessive computation can be suppressed, and therefore the load on the controller can be reduced.

The controller may set the predetermined period based on an average period necessary for the vehicle to pick up a passenger in a predetermined region associated with a position of the vehicle. The predetermined region includes a current position of the vehicle. For example, the predetermined region is a region where periods necessary for the vehicle to pick up passengers are equal or may be regarded as being equal without a problem. The average period necessary for the vehicle to pick up a passenger in the predetermined region is determined in advance, and the predetermined period is set based on the average period. Therefore, it is possible to reduce the occurrence of a case where an excessive period is set. Thus, the load on the controller can be reduced.

The controller extracts the areas under a condition that the total of the demands in the predetermined period is largest as the predetermined condition. The probability of picking up a passenger can be increased by extracting the areas associated with the respective time points so that the total of the demands is largest.

The controller may acquire the demands for a plurality of vehicles, adjust the demands depending on the number of the vehicles existing in the same area at the same time point out of the plurality of time points, and extract areas where the vehicles are located at the respective time points so that the total of the demands for the vehicles in the predetermined period satisfies a second predetermined condition. That is, the areas where the vehicles are located at the respective time points may be extracted so that the probability of picking up passengers is increased for the vehicles as a whole. For example, the vehicles may exist in the predetermined region, may be registered in the predetermined region, or may belong to the same business organization.

For example, as the number of vehicles existing in the same area at the same time point increases, the probability that any other vehicle picks up a passenger may increase. Therefore, the probabilities that the respective vehicles pick up passengers may decrease. That is, the probabilities that the vehicles pick up passengers decrease depending on the number of vehicles even if the number of passengers existing in the same area at the same time point is unchanged. Therefore, the controller may adjust the demands depending on the number of vehicles existing in the same area at the same time point. Thus, the probability of picking up passengers can be increased for the vehicles as a whole. For example, when the vehicles belong to the business organization, sales of the business organization can be increased.

The controller may adjust the demands so that the demand associated with the same area at the same time point decreases as the number of the vehicles existing in the same area at the same time point increases. That is, the demand may be adjusted so as to decrease because the probabilities that the vehicles pick up passengers decrease as the number of vehicles existing in the same area at the same time point increases. For example, when a value correlated to the number of passengers is used as the demand, the demand is adjusted so that the demand corresponds to a value obtained by reducing the number of passengers by the number of other vehicles. By adjusting the demand, excessive concentration of the vehicles on the same area at the same time point can be suppressed.

The controller may extract the areas under a condition that the total of the demands for the vehicles in the predetermined period is largest as the second predetermined condition. The probability of picking up passengers can be increased for the vehicles as a whole by extracting the areas where the vehicles are located at the respective time points so that the total of the demands for all the vehicles is largest.

Embodiments of the present disclosure are described below with reference to the drawings. The configurations of the following embodiments are illustrative, and the present disclosure is not limited to the configurations of the embodiments. The following embodiments may be combined if possible.

### First Embodiment

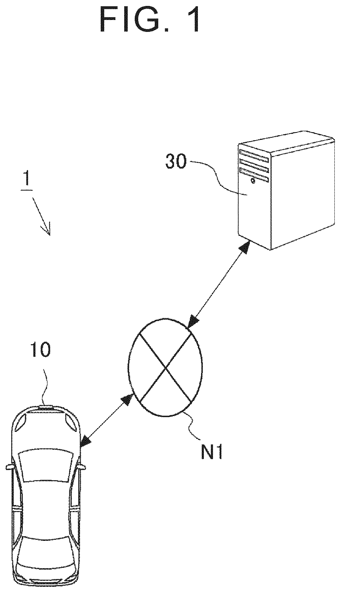

FIG. 1 is a diagram illustrating the overall configuration of a system 1 according to a first embodiment. The system 1 illustrated in FIG. 1 includes a vehicle 10 and a server 30. The vehicle 10 acquires positional information, and transmits the positional information to the server 30. The server 30 determines areas to which the vehicle 10 is movable at respective time points in the future based on the positional information of the vehicle 10, and acquires passenger demands when the vehicle 10 arrives at the respective areas. The server 30 calculates areas to which the vehicle 10 is movable at a plurality of time points (T1, ..., Tn). The symbol "n" represents a numeral equal to or larger than 2. A current time point is a time point T0. There is a plurality of combinations of areas to which the vehicle 10 is movable by the time point T1 to the time point Tn. Among the combinations of areas, the server 30 extracts a combination of areas having a highest probability of picking up passengers in the period from the time point T1 to the time point Tn. The server 30 transmits the extracted combination of areas to the vehicle 10. For example, the vehicle 10 causes a display to display a route along which the vehicle 10 moves through the received areas in order of the time points to show the route to the driver. The server 30 may generate a route along which the vehicle 10 moves through the extracted areas in order of the time points, and may transmit the route to the vehicle 10.

The vehicle 10 and the server 30 are connected together via a network N1. The network N1 is a worldwide public telecommunication network such as the Internet, and may be a wide area network (WAN) or other telecommunication networks. The network N1 may include a wireless telecommunication network such as a cellular network or Wi-Fi (registered trademark). FIG. 1 exemplifies one vehicle 10, but a plurality of vehicles 10 may exist.

### Hardware Configurations

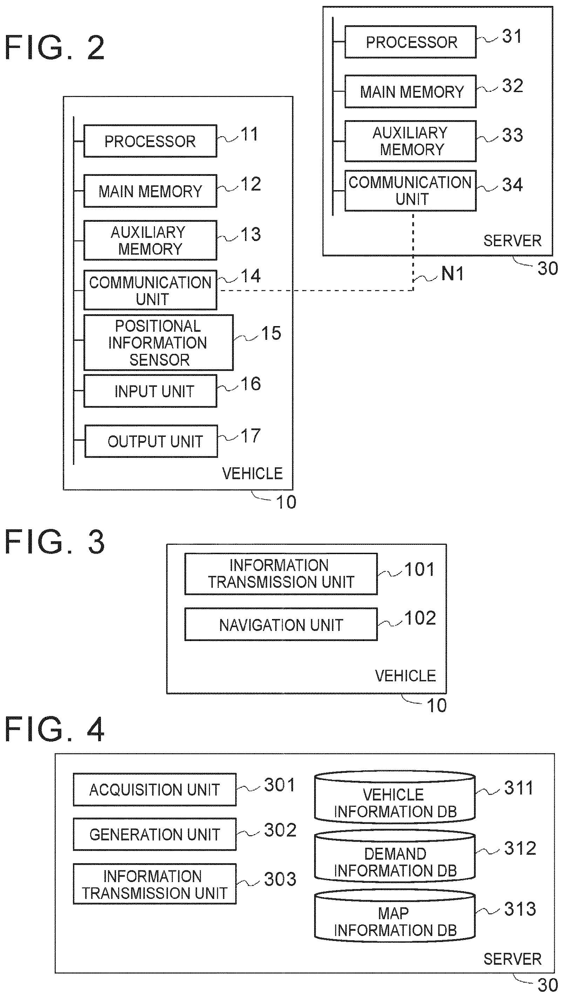

Next, the hardware configurations of the vehicle 10 and the server 30 are described with reference to FIG. 2. FIG. 2 is a block diagram schematically illustrating an example of the configurations of the vehicle 10 and the server 30 that constitute the system 1 according to the first embodiment.

The vehicle 10 includes a processor 11, a main memory 12, an auxiliary memory 13, a communication unit 14, a positional information sensor 15, an input unit 16, and an output unit 17. Those components are connected together by a bus. The processor 11 is a central processing unit (CPU), a digital signal processor (DSP), or the like. The processor 11 performs computation in various information processes for controlling the vehicle 10.

The main memory 12 is a random access memory (RAM), a read only memory (ROM), or the like. The auxiliary memory 13 is an erasable programmable ROM (EPROM), a hard disk drive (HDD), a removable medium, or the like. The auxiliary memory 13 stores an operating system (OS), various programs, various tables, and the like. The processor 11 executes the programs stored in the auxiliary memory 13 by loading the programs in a working area of the main memory 12, and controls the components through the execution of the programs. The main memory 12 and the auxiliary memory 13 are computer readable recording media. The configuration illustrated in FIG. 2 may be implemented by a plurality of computers in cooperation. The information stored in the auxiliary memory 13 may be stored in the main memory 12. The information stored in the main memory 12 may be stored in the auxiliary memory 13.

The communication unit 14 is communication means for connecting the vehicle 10 to the network N1. For example, the communication unit 14 is a circuit for communication with other apparatuses (for example, the server 30) via the network N1 by using a wireless telecommunication network such as a mobile communication service (5th Generation (5G), 4th Generation (4G), 3rd Generation (3G), Long Term Evolution (LTE), or other telephone networks) or Wi-Fi (registered trademark).

The positional information sensor 15 acquires positional information of the vehicle 10 (for example, latitude and longitude) in every predetermined period. Examples of the positional information sensor 15 include a global positioning system (GPS) receiver and a wireless local area network (LAN) communication unit. For example, the information acquired by the positional information sensor 15 is recorded in the auxiliary memory 13, and is transmitted to the server 30.

The input unit 16 is means for receiving user's input operations. Examples of the input unit 16 include a touch panel, a push button, a mouse, and a keyboard. For example, the input unit 16 can input information on whether a passenger is riding in the vehicle 10. The output unit 17 is means for presenting information for a user. Examples of the output unit 17 include a liquid crystal display (LCD), an electroluminescence (EL) panel, a loudspeaker, and an indicator. The input unit 16 and the output unit 17 may be implemented by a single touch panel display.

Next, the server 30 is described. The server 30 includes a processor 31, a main memory 32, an auxiliary memory 33, and a communication unit 34. Those components are connected together by a bus. The processor 31, the main memory 32, the auxiliary memory 33, and the communication unit 34 of the server 30 are similar to the processor 11, the main memory 12, the auxiliary memory 13, and the communication unit 14 of the vehicle 10, and therefore their description is omitted. The processor 31 of the server 30 is an example of a "controller".

A series of processes in the vehicle 10 or the server 30 may be executed by hardware, but may also be executed by software. The hardware configuration of the vehicle 10 or the server 30 is not limited to the hardware configuration illustrated in FIG. 2.

### Functional Configuration: Vehicle

FIG. 3 is a diagram illustrating an example of the functional configuration of the vehicle 10. The vehicle 10 includes an information transmission unit 101 and a navigation unit 102 as functional elements. For example, the information transmission unit 101 and the navigation unit 102 are functional elements provided such that the processor 11 of the vehicle 10 executes various programs stored in the auxiliary memory 13.

For example, the information transmission unit 101 transmits positional information acquired from the positional information sensor 15 and passenger-loading information acquired from the input unit 16 to the server 30 via the communication unit 14. The positional information indicates a current position of the vehicle 10. The passenger-loading information is information on whether a passenger is riding in the vehicle 10 (occupied state) or not riding in the vehicle 10 (vacant state). The information to be transmitted from the information transmission unit 101 to the server 30 is hereinafter referred to also as "vehicle information". The timing when the information transmission unit 101 transmits the vehicle information may be set as appropriate. For example, the information transmission unit 101 may transmit the vehicle information periodically, at a timing to transmit any other information to the server 30, or in response to a request from the server 30. The information transmission unit 101 transmits the vehicle information to the server 30 in association with identification information for identifying the driver's vehicle (vehicle ID).

The navigation unit 102 causes the output unit 17 to display a map around the current position of the vehicle 10 based on, for example, map information stored in the auxiliary memory 13. The navigation unit 102 shows a route to the driver based on information received from the server 30. For example, when information related to a route is received from the server 30, the navigation unit 102 navigates the vehicle 10 based on the route. When information related to a target area is received from the server 30, the navigation unit 102 navigates the vehicle 10 toward the area. When information related to areas associated with respective time points is received from the server 30, the navigation unit 102 navigates the vehicle 10 so that the vehicle 10 sequentially moves through the areas associated with the respective time points. For example, the navigation unit 102 displays the map and the route on the display, and shows moving directions based on the route by voice. Functions in related art may be used as the functions of the navigation unit 102.

### Functional Configuration: Server

FIG. 4 is a diagram illustrating an example of the functional configuration of the server 30. The server 30 includes an acquisition unit 301, a generation unit 302, an information transmission unit 303, a vehicle information database (DB) 311, a demand information DB 312, and a map information DB 313 as functional elements. For example, the acquisition unit 301, the generation unit 302, and the information transmission unit 303 are functional elements provided such that the processor 31 of the server 30 executes various programs stored in the auxiliary memory 33.

For example, the vehicle information DB 311, the demand information DB 312, and the map information DB 313 are relational databases configured such that programs in a database management system (DBMS) executed by the processor 31 manage data stored in the auxiliary memory 33. A subset of the functional elements of the server 30 or a subset of their processes may be executed by other computers connected to the network N1.

The acquisition unit 301 manages various types of information related to the vehicle 10. For example, the acquisition unit 301 acquires and manages vehicle information (positional information and passenger-loading information) transmitted from the vehicle 10. The acquisition unit 301 stores the vehicle information in the vehicle information DB 311 in association with a vehicle ID and a time point when the vehicle information is received.

The generation unit 302 generates a route to be provided to a vacant vehicle 10. The generation unit 302 generates all combinations of areas to which the vehicle 10 is movable by the time point T1 to the time point Tn, provided that the current time point T0 is a start point. The generation unit 302 acquires information related to demands associated with the areas at the respective time points (hereinafter referred to also as "demand information") from the demand information DB 312. The generation unit 302 calculates the totals of the demands associated with the time point T1 to the time point Tn in the respective combinations of areas. The generation unit 302 extracts a combination of areas having a largest total of the demands. The combination of areas having the largest total of the demands corresponds to a combination of movement target areas for the vehicle 10 at the time point T1 to the time point Tn. The generation unit 302 generates a route of the vehicle 10 based on the combination of areas having the largest total of the demands. The route of the vehicle 10 is generated so that the vehicle 10 is located in the extracted areas at the time point T1 to the time point Tn.

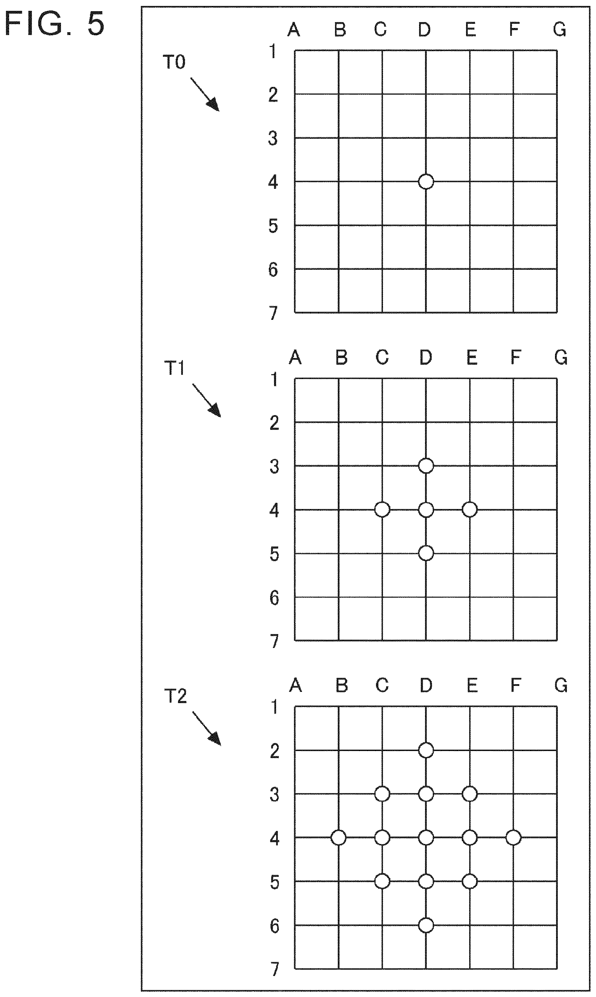

FIG. 5 is a diagram for describing areas to which the vehicle 10 is movable. In FIG. 5, a hollow circle at "T0" represents an area where the vehicle 10 is located at the time point T0, hollow circles at "T1" represent areas to which the vehicle 10 is movable by the time point T1, and hollow circles at "T2" represent areas to which the vehicle 10 is movable by the time point T2. In FIG. 5, symbols "A" to "G" are assigned to vertical lines, and symbols "1" to "7" are assigned to horizontal lines. Intersections of the vertical lines A to G and the horizontal lines 1 to 7 indicate representative points of the respective areas. For example, the intersection of the vertical line "D" and the horizontal line "4" is referred to as "area D4". Distances between the vertical lines A to G and between the horizontal lines 1 to 7 are set based on distances by which the vehicle 10 is movable between the time points. The vehicle 10 may stay in the same area until the subsequent time point. The vehicle 10 may return to an area that the vehicle 10 has ever moved through.

In FIG. 5, the vehicle 10 is located in the area D4 at the time point T0. The vehicle 10 may move to any adjacent intersection in a period from the time point T0 to the time point T1. That is, the vehicle 10 may move to an area C4, D3, D5, or E4. The vehicle 10 may stay in the area D4. Thus, the vehicle 10 is located in the area C4, D3, D4, D5, or E4 at the time point T1.

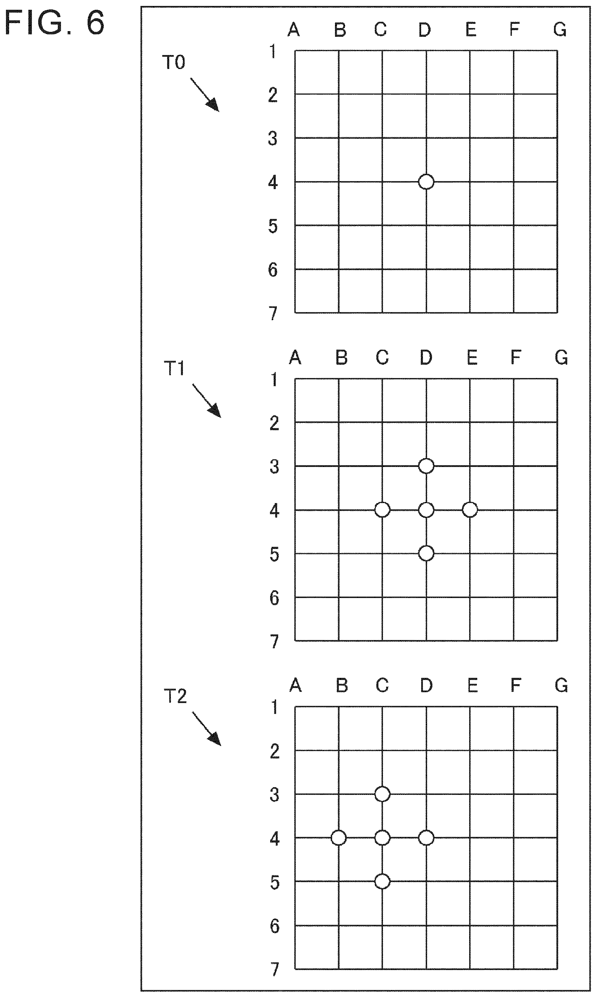

At the time point T2, the number of areas to which the vehicle 10 is movable increases. FIG. 6 is a diagram illustrating areas to which the vehicle 10 is movable in a period from the time point T1 to the time point T2 if the vehicle 10 is located in the area C4 at the time point T1. The vehicle 10 may move to any adjacent intersection in the period from the time point T1 to the time point T2. That is, when the vehicle 10 is located in the area C4 at the time point T1, the vehicle 10 may move to an area B4, C3, C5, or D4 by the time point T2. The vehicle 10 may stay in the area C4. Thus, all combinations of areas to which the vehicle 10 is movable in the period from the time point T1 to the time point Tn are calculated.

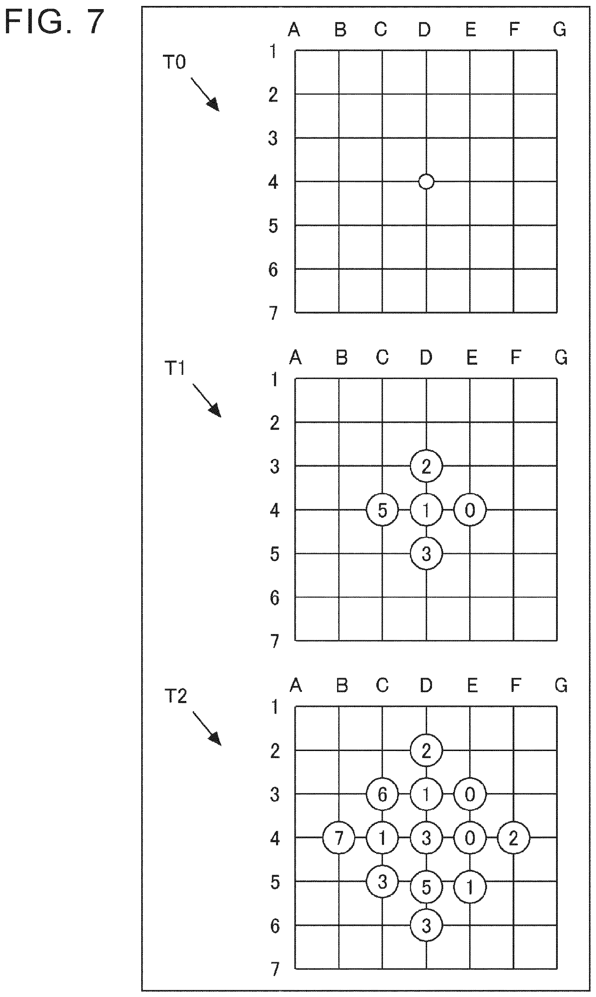

FIG. 7 is a diagram illustrating demands associated with the respective time points. In FIG. 7, numerals in the areas represent, for example, the numbers of expected passengers. For example, if the vehicle 10 moves to the area D4, the area C4, and the area B4 in this order in a period from T0 to T2, the demand at the time point T1 is "5" in the area C4, and the demand at the time point T2 is "7" in the area B4. Therefore, the total of the demands is 5 + 7 = 12.

The generation unit 302 calculates the totals of the demands in the respective combinations of areas to which the vehicle 10 is movable, and extracts a combination of areas having a largest total of the demands. The generation unit 302 may generate information related to the extracted combination of areas in association with the time points, and transmit the information to the vehicle 10. The generation unit 302 may generate a route of the vehicle 10 associated with the extracted combination of areas, and transmit the information to the vehicle 10. When the generation unit 302 transmits the information related to the extracted combination of areas to the vehicle 10, the navigation unit 102 of the vehicle 10 generates a route so that the vehicle 10 moves through the areas at the respective time points.

The information transmission unit 303 transmits, to the vehicle 10, the information related to the extracted combination of areas or the information related to the route generated based on the extracted combination of areas. For example, the transmitted information may include information related to destinations associated with the respective areas at the time point T1 to the time point Tn.

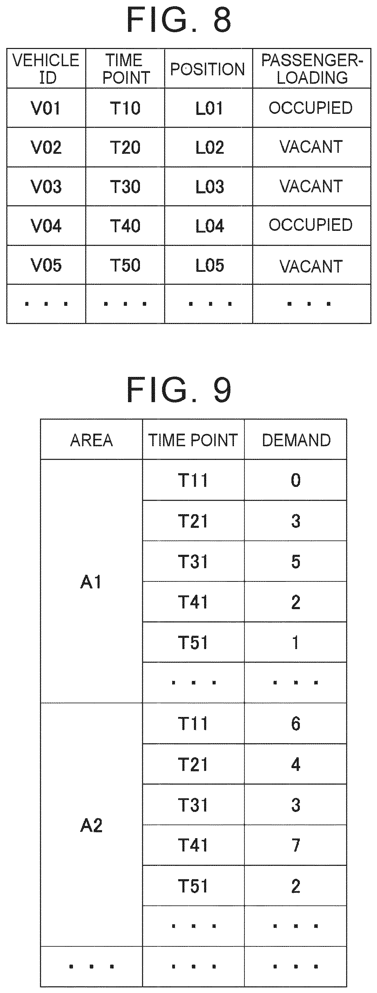

The vehicle information DB 311 is configured such that the auxiliary memory 33 stores the vehicle information. The vehicle information DB 311 stores information related to a vehicle ID, information related to a time point, positional information, and passenger-loading information. The configuration of the vehicle information stored in the vehicle information DB 311 is described with reference to FIG. 8. FIG. 8 is a diagram exemplifying the configuration of a vehicle information table. For example, the vehicle information table has a vehicle ID field, a time point field, a position field, and a passenger-loading field. Identification information for identifying the vehicle 10 is input to the vehicle ID field. Information related to a time point when the vehicle information is acquired is input to the time point field. Positional information transmitted from the vehicle 10 is input to the position field. Passenger-loading information transmitted from the vehicle 10 is input to the passenger-loading field. When the vehicle information is received from the vehicle 10, the acquisition unit 301 updates records associated with the vehicle 10 in the vehicle information DB 311.

The demand information DB 312 is configured such that the auxiliary memory 33 stores the demand information. The configuration of the demand information stored in the demand information DB 312 is described with reference to FIG. 9. FIG. 9 is a diagram exemplifying the configuration of a demand information table. For example, the demand information table has an area field, a time point field, and a demand field. Information for identifying an area is input to the area field. Information related to a time point associated with a demand is input to the time point field. Information related to a demand (demand information) is input to the demand field. For example, the demand information is related to the number of expected passengers in a certain area. For example, the demand information may be obtained by deriving a current population distribution based on the number of accesses to the cellular network in each area and analyzing a demand by using artificial intelligence based on, for example, time-series data of population distribution, weather data, information related to events, and information as to whether railway services are suspended. The demand information may be calculated based on previous records. The demand information may be generated by the generation unit 302, or may be provided from other systems. The information related to the demand may be acquired by using related art.

The map information DB 313 stores map information including map data and point of interest (POI) information on texts and images showing features at respective points on the map data. The map information DB 313 may be provided from other systems connected to the network N1, such as a geographic information system (GIS). For example, the map data includes link data related to roads (links), node data related to nodes, intersection data related to traffic intersections, search data for use in search for routes, facility data related to facilities, and search data for use in search for locations.

### Flow of Process: Server

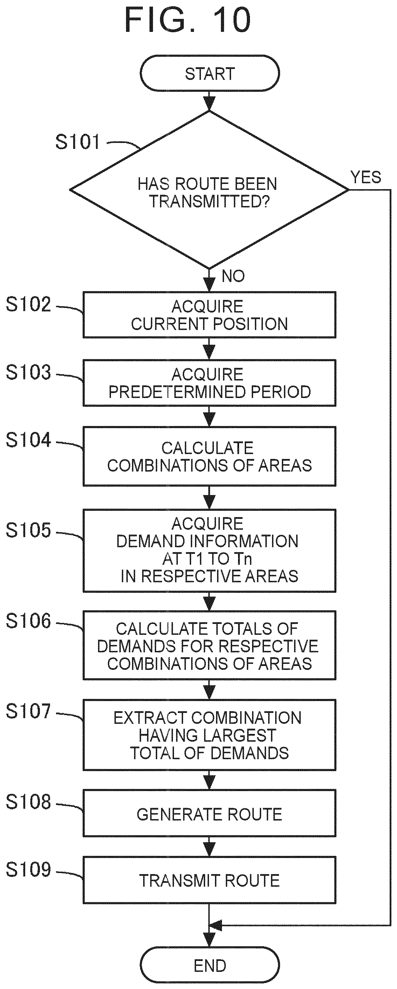

Next, a process to be performed by the server 30 according to the first embodiment is described with reference to FIG. 10. FIG. 10 is a flowchart illustrating an example of a process for outputting a route from the server 30 to the vehicle 10. The process illustrated in FIG. 10 is executed by the processor 31 in every predetermined period for a vacant vehicle 10. The vehicle information DB 311 and the demand information DB 312 store necessary information. If a plurality of vehicles 10 exists, the process is executed for each vehicle 10.

In Step S101, the information transmission unit 303 determines whether information related to a route has been transmitted to the vehicle 10. In Step S101, the information transmission unit 303 determines whether transmitting information related to the vehicle 10 is unnecessary. When the result of the determination in Step S101 is "No", the process proceeds to Step S102. When the result of the determination in Step S101 is "Yes", this routine is terminated. In Step S102, the generation unit 302 acquires a current position of the vehicle 10 from the vehicle information DB 311. In Step S103, the generation unit 302 acquires a period for route guidance (predetermined period) based on the current position of the vehicle 10. For example, the predetermined period is set to an average of periods necessary for the vehicle 10 to pick up passengers. Thus, the route guidance is carried out for a necessary and sufficient period. For example, the start point of the predetermined period is a current time point, but may be set to any time point. The predetermined period is set for each predetermined region. For example, the predetermined region may be a region bordered based on administrative division, or may be a region bordered by longitude and latitude lines. The predetermined region includes a plurality of areas. The generation unit 302 identifies a predetermined region including the current position of the vehicle 10 by using the information stored in the map information DB 313, and then acquires a predetermined period associated with the predetermined region. A relationship between the predetermined region and the predetermined period is stored in the auxiliary memory 33 in advance.

In Step S104, the generation unit 302 calculates combinations of areas to which the vehicle 10 is movable in the predetermined period. The generation unit 302 calculates areas where the vehicle 10 can arrive at the time point T1 to the time point Tn from a start point that is an area including the current position of the vehicle 10. The time point T1 to the time point Tn are set so as to divide the predetermined period. For example, the predetermined period is divided into constant periods (for example, 10 minutes, 30 minutes, or 1 hour). For example, the areas to which the vehicle 10 is movable by the respective time points are set based on intervals between the time points and the speed of the vehicle 10. For example, the speed of the vehicle 10 is calculated based on speed limits on roads and information on possible traffic jams. The generation unit 302 calculates all the combinations of areas to which the vehicle 10 is movable in the predetermined period.

In Step S105, the generation unit 302 acquires demand information associated with the areas to which the vehicle 10 is movable at the time point T1 to the time point Tn. The generation unit 302 accesses the demand information DB 312 to acquire demand information associated with the respective time points in the areas.

In Step S106, the generation unit 302 calculates the totals of demands associated with the respective combinations of areas to which the vehicle 10 is movable in the predetermined period. The generation unit 302 sums up the demands associated with the time point T1 to the time point Tn in the respective combinations of areas. In Step S107, the generation unit 302 extracts a combination of areas having a largest total of the demands. In Step S108, the generation unit 302 generates a route of the vehicle 10. The generation unit 302 generates the route of the vehicle 10 so that the vehicle 10 travels through the areas associated with the time point T1 to the time point Tn. When the generation unit 302 generates the route, the information transmission unit 303 transmits information including the route to the vehicle 10 in Step S109. The information transmission unit 303 may transmit information indicating a relationship between a time point and an area to the vehicle 10 instead of transmitting the information including the route. In this case, the route is generated in the vehicle 10.

### Flows of Processes: Vehicle

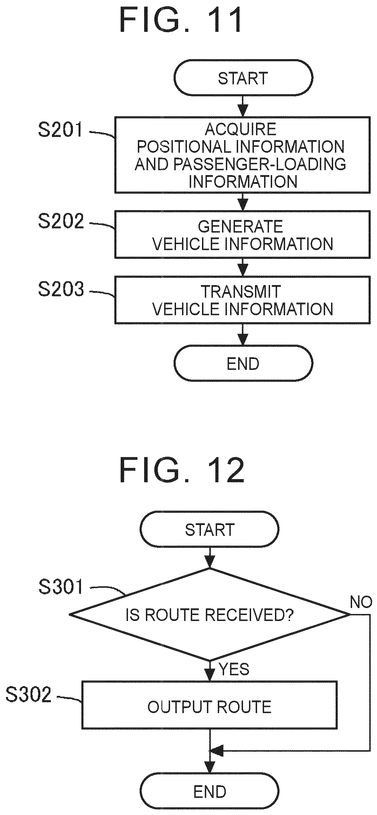

Processes to be performed in the vehicle 10 are described with reference to FIG. 11 and FIG. 12. FIG. 11 is a flowchart illustrating a flow of a process for outputting vehicle information from the vehicle 10. The process illustrated in FIG. 11 is executed by the processor 11 in every predetermined period in each vehicle 10.

In Step S201, the information transmission unit 101 acquires positional information and passenger-loading information. The positional information is detected by the positional information sensor 15. The passenger-loading information is input by using the input unit 16 by the driver. In Step S202, the information transmission unit 101 generates vehicle information including the positional information. The information transmission unit 101 generates the vehicle information by associating the positional information and the passenger-loading information with the vehicle ID. In Step S203, the information transmission unit 101 transmits the generated vehicle information to the server 30.

FIG. 12 is a flowchart illustrating a flow of a process to be performed when the vehicle 10 shows a route to the driver. The process illustrated in FIG. 12 is executed by the processor 11 in every predetermined period.

In Step S301, the navigation unit 102 determines whether information including a route is received from the server 30. When the result of the determination in Step S301 is "Yes", the process proceeds to Step S302. When the result of the determination in Step S301 is "No", this routine is terminated. In Step S302, the navigation unit 102 outputs the route of the vehicle 10 to the output unit 17 based on the information received from the server 30. The driver can know traveling directions of the vehicle 10 based on the output from the output unit 17.

According to the embodiment described above, the server 30 extracts a combination of areas having a largest total of demands so that the probability that the vehicle 10 picks up passengers can be increased. Thus, sales can be increased.

### Second Embodiment

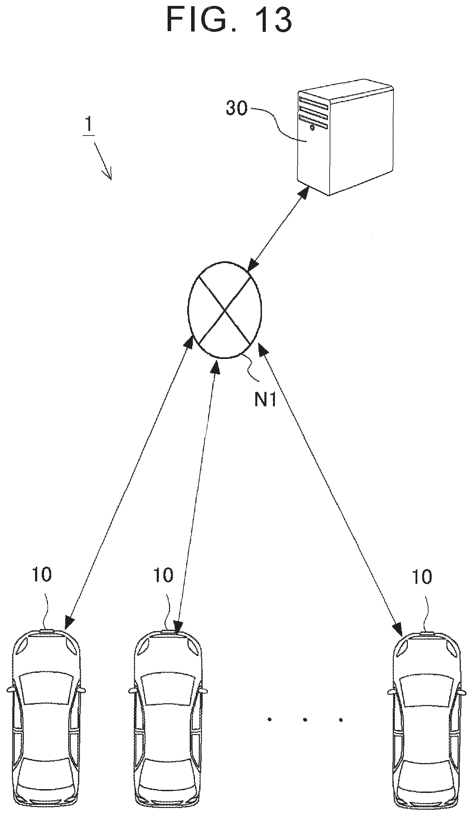

FIG. 13 is a diagram illustrating the overall configuration of a system 1 according to a second embodiment. The system 1 illustrated in FIG. 13 includes a plurality of vehicles 10 and a server 30. For example, the vehicles 10 belong to the same business organization. The hardware configuration and the functional configuration of each vehicle 10 are the same as those of the vehicle 10 of the first embodiment. The hardware configuration of the server 30 is the same as that of the server 30 of the first embodiment. Similarly to the vehicle 10 of the first embodiment, each vehicle 10 transmits vehicle information to the server 30.

The server 30 determines areas to which the vehicles 10 are movable at respective time points in the future based on positional information of the vehicles 10, and acquires passenger demands associated with the time points when the vehicles 10 arrive at the areas. For example, the server 30 calculates all combinations of areas to which the vehicles 10 are movable at a plurality of time points (T1, ..., Tn). The symbol "n" represents a numeral equal to or larger than 2. A current time point is a time point T0. There is a plurality of combinations of areas to which the vehicles 10 are movable by the time point T1 to the time point Tn. Among the combinations of areas, the server 30 extracts combinations of areas to which the vehicles 10 are movable so that the probability of picking up passengers in the period from the time point T1 to the time point Tn is highest in the entire system 1. The server 30 transmits, to the vehicles 10, the combinations of areas associated with the vehicles 10 or routes associated with the vehicles 10, respectively. For example, the vehicles 10 cause their displays to display the routes along which the vehicles 10 sequentially move through the received areas to show the routes to the drivers.

If the vehicles 10 exist in the same area at the same time point, the probabilities that the vehicles 10 pick up passengers in this area may decrease. For example, if many vehicles 10 concentrate on the same area at the same time point because of a high demand, any other vehicle may pick up a passenger before the driver's vehicle picks up the passenger. If a certain area has a low demand but the number of vehicles 10 is small, the probabilities of picking up passengers may increase. In the second embodiment, areas to which the vehicles 10 move at the respective time points are extracted so that the probability of picking up passengers is highest in the entire system 1. The server 30 or the vehicles 10 set(s) routes so that the vehicles 10 move through the areas at the respective time points. Therefore, when the vehicles 10 exist in the same area at the same time point, the server 30 adjusts a prestored demand depending on the number of vehicles 10. For example, when the vehicles 10 exist in the same area at the same time point, the demand is regarded as being lower than the prestored demand. In this case, the demand may be adjusted so that the demand decreases as the number of vehicles 10 existing in the same area at the same time point increases. For example, when the demand indicates the number of passengers, the value of the demand is adjusted by subtracting, from the demand, the number of vehicles 10 existing in the same area at the same time point except for the driver's vehicle. For example, the demand may be adjusted by multiplying the prestored demand by a coefficient that depends on the number of vehicles 10 existing in the same area at the same time point. Thus, it is possible to reduce the occurrence of the case where the vehicles 10 have difficulty in picking up passengers by suppressing concentration of the vehicles 10 on the same area at the same time point.

The vehicles 10 and the server 30 are connected together via a network N1. The network N1 is a worldwide public telecommunication network such as the Internet, and may be a wide area network (WAN) or other telecommunication networks. The network N1 may include a wireless telecommunication network such as a cellular network or Wi-Fi (registered trademark).

The functional configuration of the server 30 of the second embodiment is described with reference to FIG. 4. For example, the acquisition unit 301 of the second embodiment acquires and manages vehicle information (positional information and passenger-loading information) transmitted from the vehicles 10. The acquisition unit 301 stores the vehicle information in the vehicle information DB 311 in association with vehicle IDs. The configuration of the information stored in the vehicle information DB 311 is as illustrated in FIG. 8.

The generation unit 302 of the second embodiment generates routes to be provided to the vacant vehicles 10. The generation unit 302 generates all combinations of areas to which the vehicles 10 are movable by the time point T1 to the time point Tn, provided that the current time point T0 is a start point. The generation unit 302 acquires demand information associated with the areas at the respective time points from the demand information DB 312. The generation unit 302 calculates the totals of the demands associated with the time point T1 to the time point Tn in the respective combinations of areas in the entire system 1. When any other vehicle 10 exists in the same area at the same time point, the value of the demand in this area at this time point is adjusted depending on the number of other existing vehicles 10.

For example, when any other vehicle 10 exists in the same area at the same time point, the generation unit 302 subtracts the number of other vehicles 10 from the demand in this area. That is, when any other vehicle 10 exists in the same area at the same time point, the probability of picking up a passenger decreases depending on the number of other vehicles 10. Therefore, the value of the demand is adjusted so that the demand is lower than the demand stored in the demand information DB 312. The generation unit 302 calculates the total of the demands in the entire system 1 by summing up the totals of the demands for all the vehicles 10. The generation unit 302 extracts combinations of areas to which the vehicles 10 are movable so that the total of the demands in the entire system 1 is largest.

The combinations of areas having the largest total of the demands in the entire system 1 correspond to combinations of movement target areas for the vehicles 10 at the time point T1 to the time point Tn. The generation unit 302 generates routes of the vehicles 10 based on the combinations of areas having the largest total of the demands. The routes of the vehicles 10 are generated so that the vehicles 10 are located in corresponding areas at the time point T1 to the time point Tn.

### Flow of Process: Server

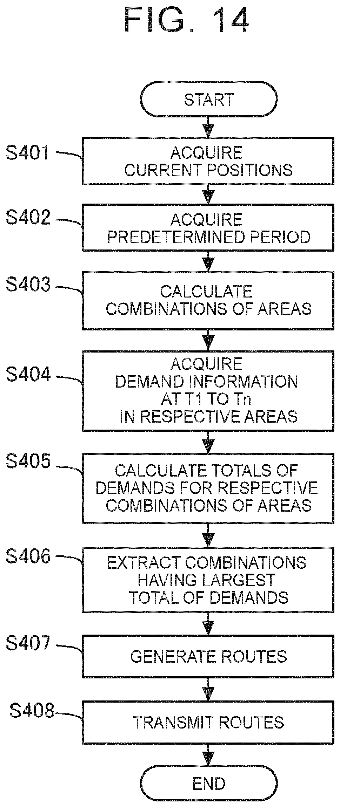

Next, a process to be performed by the server 30 according to the second embodiment is described with reference to FIG. 14. FIG. 14 is a flowchart illustrating an example of a process for outputting routes from the server 30 to the vehicles 10. The process illustrated in FIG. 14 is executed by the processor 31 in every predetermined period in the entire system 1. The vehicle information DB 311 and the demand information DB 312 store necessary information.

In Step S401, the generation unit 302 acquires current positions of the vehicles 10 from the vehicle information DB 311. In Step S402, the generation unit 302 acquires a period for route guidance (predetermined period) based on the current positions of the vehicles 10. For example, the predetermined period is set based on a service region of the business organization to which the vehicles 10 belong. A relationship between the service region and the predetermined period is prestored in the auxiliary memory 33. For example, the predetermined period is an average of periods necessary for the vehicles 10 to pick up passengers in the service region.

In Step S403, the generation unit 302 calculates combinations of areas to which the vehicles 10 are movable in the predetermined period. The generation unit 302 calculates areas where the vehicles 10 can arrive at the time point T1 to the time point Tn from start points that are areas including the current positions of the vehicles 10. The time point T1 to the time point Tn are set so as to divide the predetermined period. For example, the predetermined period is divided into constant periods (for example, 10 minutes, 30 minutes, or 1 hour). For example, the areas to which the vehicles 10 are movable by the respective time points are calculated based on intervals between the time points and the speeds of the vehicles 10. The generation unit 302 calculates all the combinations of areas to which the vehicles 10 are movable in the predetermined period.

In Step S404, the generation unit 302 acquires demand information associated with the areas to which the vehicles 10 are movable at the time point T1 to the time point Tn. The generation unit 302 accesses the demand information DB 312 to acquire demand information associated with the respective time points in the areas.

In Step S405, the generation unit 302 calculates the totals of demands associated with the respective combinations of areas to which the vehicles 10 are movable in the predetermined period. The generation unit 302 sums up the demands associated with the time point T1 to the time point Tn in the entire system 1. When any other vehicle 10 exists in the same area at the same time point, the demand is calculated as being lower by the number of other vehicles 10. In Step S406, the generation unit 302 extracts combinations of areas having the largest total of the demands in the entire system 1.

In Step S407, the generation unit 302 generates routes of the vehicles 10. The generation unit 302 generates the routes of the vehicles 10 so that the vehicles 10 travel through the areas extracted in Step S406. When the generation unit 302 generates the routes of the vehicles 10, the information transmission unit 303 transmits information including the routes to the vehicles 10 in Step S408. The information transmission unit 303 may transmit information indicating a relationship between a time point and an area to the vehicles 10 instead of transmitting the information including the routes. In this case, the routes are generated in the vehicles 10, respectively.

According to the embodiment described above, it is possible to provide routes of the vehicles 10 having a highest probability of picking up passengers in the entire region where the vehicles 10 exist. Thus, sales of all the vehicles 10 in this region can be increased.

### Other Embodiments

The embodiments described above are only illustrative and the present disclosure may be modified as appropriate without departing from the scope of the claimed invention. In the embodiments described above, the server 30 includes the acquisition unit 301, the generation unit 302, the information transmission unit 303, the vehicle information DB 311, the demand information DB 312, and the map information DB 313, but the vehicle 10 may include a subset or all of the functional elements.

In the embodiments described above, a combination of areas having highest demands is extracted, but a combination of areas having demands within a permissible range may be extracted instead. Thus, the computation period can be shortened.

For example, at least a part of the controller of the present disclosure may be the processor 11 of the vehicle 10.

The processes and means described in the present disclosure may freely be combined without causing any technical contradiction.

The process described as being executed by a single apparatus may be executed by a plurality of apparatuses in cooperation. Alternatively, the process described as being executed by different apparatuses may be executed by a single apparatus. In the computer system, the hardware configuration (server configuration) that implements functions may be changed flexibly.

The present disclosure may be embodied such that a computer program that implements the functions described in the embodiments described above is supplied to a computer and is read and executed by one or more processors of the computer. The computer program may be provided to the computer by being stored in a non-transitory computer readable storage medium connectable to a system bus of the computer, or may be provided to the computer via a network. Examples of the non-transitory computer readable storage medium include any types of disk or disc such as magnetic disks (for example, a floppy (registered trademark) disk and a hard disk drive (HDD)) and optical discs (for example, a compact disc ROM (CD-ROM), a digital versatile disc (DVD), and a Blu-ray disc), and any types of medium suitable to store electronic instructions, such as a read only memory (ROM), a random access memory (RAM), an EPROM, an electrically erasable programmable ROM (EEPROM), a magnetic card, a flash memory, and an optical card.

## Claims

1. A computer-implemented method comprising the steps of:
calculating, based on positional information of a vehicle (10) at a current time point (T0), a plurality of combinations of areas, wherein each combination of areas comprises areas to which the vehicle (10) is sequentially movable at respective time points (T1...Tn) dividing a predetermined period in the future;
acquiring passenger demands, which are passenger demands of each area of said combinations of areas at each respective time point;
calculating a total of the passenger demands in the predetermined period for each combination of areas by summing up for each combination of areas the passenger demands associated to the respective time points;
extracting, from said combinations of areas, a combination of areas such that the total of the passenger demands in the predetermined period is largest;
generating a route of the vehicle (10) such that the vehicle (10) moves through the extracted combination of areas in order of the respective time points.

2. The computer-implemented method according to claim 1, comprising a step of transmitting information about the extracted combination of areas to the vehicle (10).

3. The computer-implemented method according to claim 1 or 2, comprising the step of:
transmitting the route to the vehicle (10).

4. The computer-implemented method according to any one of claims 1 to 3, wherein the predetermined period is set based on the positional information of the vehicle (10).

5. The computer-implemented method according to claim 4, wherein the predetermined period is set based on an average period necessary for the vehicle (10) to pick up a passenger in a predetermined region corresponding to a position of the vehicle (10).

6. The computer-implemented method according to any one of claims 1 to 5, wherein:
the passenger demands are acquired for a plurality of the vehicles (10);
the passenger demands are adjusted depending on the number of the vehicles (10) existing in the same area at the same time point out of the time points; and
areas where the vehicles (10) are located at the each of the time points are extracted such that a total of the passenger demands for the vehicles (10) in the predetermined period satisfies a second predetermined condition.

7. The computer-implemented method according to claim 6, wherein the passenger demands are adjusted such that the passenger demands associated with the same area at the same time point decrease as the number of the vehicles (10) existing in the same area at the same time point increases.

8. The computer-implemented method according to claim 6 or 7, wherein the areas are extracted such that the total of the demands for the vehicles (10) in the predetermined period satisfies the second predetermined condition that the total of the demands for the vehicles (10) in the predetermined period is largest.

9. A non-transitory storage medium (12; 13; 32; 33) storing instructions that are executable by one or more processors (11; 31) and that, when executed by the one or more processors (11; 31) cause the one or more processors (11; 31) to perform functions comprising the computer-implemented method according to any one of claims 1 to 8.

10. An information processing apparatus (10; 30) comprising a controller (11; 31); the controller (11; 31) being configured to carry out the computer-implemented method according to any one of claims 1 to 8.

11. The information processing apparatus (10; 30) according to claim 10, further comprising a memory (33) configured to, at the each of the time points, store the demands of passengers in each of the areas.

12. A system (1) comprising:
a vehicle (10) configured to transmit positional information at a current time point to a server (30); and
the server (30) including a controller (31) configured to:
acquire, based on the positional information received from the vehicle (10), combinations of areas, wherein each combination of areas comprises areas to which the vehicle (10) is sequentially movable at respective time points dividing a predetermined period in the future;
acquire passenger demands, which are passenger demands of each area of said combinations of areas at each respective time point;
calculate a total of the passenger demands in the predetermined period for each combination of areas by summing up for each combination of areas the passenger demands associated to the respective time points; and
extract, from said combinations of areas, a combination of areas where the vehicle (10) is located at the each of the time points such that a total of the demands in the predetermined period is largest;
and wherein the system is further configured to generate a route of the vehicle (10) such that the vehicle (10) moves through the extracted combination of areas in order of the respective time points.

## Patentansprüche

1. Computerimplementiertes Verfahren, umfassend die folgenden Schritte:
Berechnen, basierend auf Positionsinformationen eines Fahrzeugs (10) zu einem aktuellen Zeitpunkt (T0), einer Vielzahl von Kombinationen von Gebieten, wobei jede Kombination von Gebieten Gebiete umfasst, zu denen das Fahrzeug (10) zu jeweiligen Zeitpunkten (T1...Tn), die eine vorher festgelegte Zeitspanne in der Zukunft unterteilen, sequentiell bewegbar ist;
Erfassen von Fahrgastnachfragen, was Fahrgastnachfragen in jedem Gebiet der Kombinationen von Gebieten zu jedem jeweiligen Zeitpunkt sind;
Berechnen einer Gesamtanzahl der Fahrgastnachfragen in der vorbestimmten Zeitspanne für jede Kombination von Gebieten durch Aufsummieren der Fahrgastnachfragen, die mit den jeweiligen Zeitpunkten assoziiert sind, für jede Kombination von Gebieten;
Extrahieren einer solchen Kombination von Gebieten aus den genannten Kombinationen von Gebieten, sodass die Gesamtanzahl der Fahrgastnachfragen in der vorbestimmten Zeitspanne am größten ist;
Erzeugen einer Route des Fahrzeugs (10), sodass das Fahrzeug (10) durch die extrahierte Kombination von Gebieten in der Reihenfolge der jeweiligen Zeitpunkte fährt.

2. Computerimplementiertes Verfahren nach Anspruch 1, umfassend einen Schritt eines Übertragens von Informationen über die extrahierte Kombination von Gebieten an das Fahrzeug (10).

3. Computerimplementiertes Verfahren nach Anspruch 1 oder 2, umfassend den folgenden Schritt:
Übertragen der Route an das Fahrzeug (10).

4. Computerimplementiertes Verfahren nach einem der Ansprüche 1 bis 3, wobei die vorbestimmte Zeitspanne basierend auf den Positionsdaten des Fahrzeugs (10) festgelegt wird.

5. Computerimplementiertes Verfahren nach Anspruch 4, wobei die vorbestimmte Zeitspanne basierend auf einer durchschnittlichen Zeitspanne festgelegt wird, die das Fahrzeug (10) benötigt, um einen Fahrgast in einem vorbestimmten Gebiet aufzunehmen, der einer Position des Fahrzeugs (10) entspricht.

6. Computerimplementiertes Verfahren nach einem der Ansprüche 1 bis 5, wobei:
die Fahrgastnachfragen für eine Vielzahl von Fahrzeugen (10) erfasst werden;
die Fahrgastnachfragen abhängig von der Anzahl der Fahrzeuge (10) angepasst wird, die zu demselben Zeitpunkt in demselben Gebiet vorhanden sind; und
die Gebiete, in denen sich die Fahrzeuge (10) zu den einzelnen Zeitpunkten befinden, extrahiert werden, sodass eine Gesamtanzahl der Fahrgastnachfragen für die Fahrzeuge (10) in der vorbestimmten Zeitspanne eine zweite vorbestimmte Bedingung erfüllt.

7. Computerimplementiertes Verfahren nach Anspruch 6, wobei die Fahrgastnachfrage angepasst wird, sodass die Fahrgastnachfragen, die demselben Gebiet zu demselben Zeitpunkt zugeordnet ist, abnimmt, wenn die Anzahl der Fahrzeuge (10), die zu demselben Zeitpunkt in demselben Gebiet vorhanden sind, zunimmt.

8. Computerimplementiertes Verfahren nach Anspruch 6 oder 7, wobei die Gebiete extrahiert werden, sodass die Gesamtanzahl der Anfragen für die Fahrzeuge (10) in der vorbestimmten Zeitspanne die zweite vorbestimmte Bedingung erfüllt, dass die Gesamtanzahl der Anfragen für die Fahrzeuge (10) in der vorbestimmten Zeitspanne am größten ist.

9. Nicht-transitorisches Speichermedium (12; 13; 32; 33), das Anweisungen speichert, die von einem oder mehreren Prozessoren (11; 31) ausführbar sind und die, wenn sie von dem einen oder den mehreren Prozessoren (11; 31) ausgeführt werden, den einen oder die mehreren Prozessoren (11; 31) veranlassen, Funktionen durchzuführen, umfassend das computerimplementierte Verfahren nach einem der Ansprüche 1 bis 8.

10. Informationsverarbeitungsgerät (10; 30), umfassend eine Steuerung (11; 31);
wobei die Steuerung (11; 31) konfiguriert ist, um das computerimplementierte Verfahren nach einem der Ansprüche 1 bis 8 auszuführen.

11. Informationsverarbeitungsgerät (10; 30) nach Anspruch 10, ferner umfassend einen Speicher (33), der konfiguriert ist, um zu jedem der Zeitpunkte die Anfragen der Fahrgäste in jedem der Gebiete zu speichern.

12. System (1), umfassend:
ein Fahrzeug (10), das konfiguriert ist, um Positionsinformationen zu einem aktuellen Zeitpunkt an einen Server (30) zu übertragen; und
wobei der Server (30) eine Steuerung (31) beinhaltet, die zu Folgendem konfiguriert ist:
Erfassen, basierend auf den von dem Fahrzeug (10) empfangenen Positionsinformationen, von Kombinationen von Gebieten, wobei jede Kombination von Gebieten Gebiete umfasst, in die das Fahrzeug (10) zu jeweiligen Zeitpunkten, die eine vorbestimmte Zeitspanne in der Zukunft unterteilen, nacheinander bewegbar ist;
Erfassen von Fahrgastnachfragen, was Fahrgastnachfragen in jedem Gebiet der Kombinationen von Gebieten zu jedem jeweiligen Zeitpunkt sind;
Berechnen einer Gesamtanzahl der Fahrgastnachfragen in der vorbestimmten Zeitspanne für jede Kombination von Gebieten durch Aufsummieren der Fahrgastnachfragen, die mit den jeweiligen Zeitpunkten assoziiert sind, für jede Kombination von Gebieten; und
Extrahieren, aus den Kombinationen von Gebieten, eine Kombination von Gebieten, in denen sich das Fahrzeug (10) zu jedem der Zeitpunkte befindet, sodass die Gesamtanzahl der Nachfragen in dem vorbestimmten Zeitraum am größten ist;
und wobei das System ferner konfiguriert ist, um eine Route des Fahrzeugs (10) zu erzeugen, sodass das Fahrzeug (10) durch die extrahierte Kombination von Gebieten in der Reihenfolge der jeweiligen Zeitpunkte fährt.

## Revendications

1. Procédé mis en œuvre par ordinateur comprenant les étapes de :
calcul, sur la base d'une information de position d'un véhicule (10) à un instant courant (T0), d'une pluralité de combinaisons de zones, chaque combinaison de zones comprenant des zones vers lesquelles le véhicule (10) est séquentiellement mobile à des instants respectifs (T1... Tn) divisant une période prédéterminée dans le futur ;
acquisition de demandes de passager, qui sont des demandes de passager de chaque zone desdites combinaisons de zones à chaque instant respectif ;
calcul d'un total des demandes de passager pendant la période prédéterminée pour chaque combinaison de zones en additionnant pour chaque combinaison de zones les demandes de passager associées aux instants respectifs ;
extraction, à partir desdites combinaisons de zones, d'une combinaison de zones de telle sorte que le total des demandes de passager pendant la période prédéterminée est le plus grand ;
génération d'un itinéraire du véhicule (10) de telle sorte que le véhicule (10) se déplace à travers la combinaison de zones extraite dans l'ordre des instants respectifs.

2. Procédé mis en œuvre par ordinateur selon la revendication 1, comprenant une étape de transmission au véhicule (10) d'information sur la combinaison de zones extraite.

3. Procédé mis en œuvre par ordinateur selon la revendication 1 ou 2, comprenant l'étape de :
transmission de l'itinéraire au véhicule (10).

4. Procédé mis en œuvre par ordinateur selon l'une quelconque des revendications 1 à 3, selon lequel la période prédéterminée est établie sur la base de l'information de position du véhicule (10).

5. Procédé mis en œuvre par ordinateur selon la revendication 4, selon lequel la période prédéterminée est établie sur la base d'une période moyenne nécessaire pour que le véhicule (10) prenne un passager dans une zone prédéterminée correspondant à une position du véhicule (10).

6. Procédé mis en œuvre par ordinateur selon l'une quelconque des revendications 1 à 5, selon lequel :
les demandes de passager sont acquises pour une pluralité de véhicules (10) ;
les demandes de passager sont ajustées en fonction du nombre de véhicules (10) existant dans la même zone au même instant parmi les instants ; et
des zones où les véhicules (10) se trouvent à chacun des instants sont extraites de telle sorte qu'un total des demandes de passager pour les véhicules (10) pendant la période prédéterminée satisfait une deuxième condition prédéterminée.

7. Procédé mis en œuvre par ordinateur selon la revendication 6, selon lequel les demandes de passager sont ajustées de telle sorte que les demandes de passager associées à la même zone au même instant diminuent lorsque le nombre de véhicules (10) existant dans la même zone au même instant augmente.

8. Procédé mis en œuvre par ordinateur selon la revendication 6 ou 7, selon lequel les zones sont extraites de telle sorte que le total des demandes pour les véhicules (10) pendant la période prédéterminée satisfait la deuxième condition prédéterminée selon laquelle le total des demandes pour les véhicules (10) pendant la période prédéterminée est le plus grand.

9. Support de stockage non-transitoire (12 ; 13 ; 32 ; 33) qui stocke des instructions qui sont exécutables par un ou plusieurs processeurs (11 ; 31) et qui, lorsqu'elles sont exécutées par les un ou plusieurs processeurs (11 ; 31) amènent les un ou plusieurs processeurs (11 ; 31) à remplir des fonctions comprenant le procédé mis en œuvre par ordinateur selon l'une quelconque des revendications 1 à 8.

10. Appareil de traitement de l'information (10 ; 30) comprenant un dispositif de commande (11 ; 31) ; le dispositif de commande (11 ; 31) étant configuré pour exécuter le procédé mis en œuvre par ordinateur selon l'une quelconque des revendications 1 à 8.

11. Appareil de traitement de l'information (10 ; 30) selon la revendication 10, comprenant en outre une mémoire (33) configurée pour, à chacun des instants, stocker les demandes des passagers dans chacune des zones.

12. Système (1) comprenant :
un véhicule (10) configuré pour transmettre à un serveur (30) de l'information de position à un instant courant ; et
le serveur (30) comprenant un circuit de commande (31) configuré pour :
acquérir, sur la base de l'information de position reçue du véhicule (10), des combinaisons de zones, chaque combinaison de zones comprenant des zones vers lesquelles le véhicule (10) est séquentiellement mobile à des instants respectifs divisant une période prédéterminée dans le futur ;
acquérir des demandes de passager, qui sont des demandes de passager de chaque zone desdites combinaisons de zones à chaque instant respectif ;
calculer un total des demandes de passager pendant la période prédéterminée pour chaque combinaison de zones en additionnant pour chaque combinaison de zones les demandes de passager associées aux instants respectifs ; et
extraire, à partir desdites combinaisons de zones, une combinaison de zones où le véhicule (10) se trouve à chacun des instants de telle sorte que le total des demandes pendant la période prédéterminée est le plus grand ;
et le système étant en outre configuré pour générer un itinéraire du véhicule (10) de telle sorte que le véhicule (10) se déplace à travers la combinaison de zones extraite dans l'ordre des instants respectifs.
